# FASCICULE DE BREVET EUROPEEN

(11) **EP 3 795 537 B1**
(45) Date de publication et mention de la délivrance du brevet: **12.01.2022**
(21) Numéro de dépôt: 20196875.7
(22) Date de dépôt: 18.09.2020
(51) Int. Cl.: C01B 3/38, C01B 3/50, B01J 19/24, B01J 8/06, B01J 8/00, B01J 8/02

(54) **REACTEUR A LIT FIXE CATALYTIQUE INTEGRANT UN ELEMENT CHAUFFANT ELECTRIQUE, UNITE DE PRODUCTION D'HYDROGENE PAR VAPOREFORMAGE COMPRENANT UN TEL REACTEUR ET UN GENERATEUR DE VAPEUR ELECTRIQUE, PROCEDE DE FONCTIONNEMENT ASSOCIE**
KATALYTISCHER FESTBETTREAKTOR MIT EINEM ELEKTRISCHEN HEIZELEMENT, EINHEIT ZUR HERSTELLUNG VON WASSERSTOFF DURCH DAMPFREFORMIERUNG, DIE EINEN SOLCHEN REAKTOR UND EINEN ELEKTRISCHEN DAMPFERZEUGER UMFASST, ENTSPRECHENDES BETRIEBSVERFAHREN
CATALYTIC FIXED-BED REACTOR INCLUDING AN ELECTRIC HEATING ELEMENT, UNIT FOR PRODUCING HYDROGEN BY STEAM REFORMING COMPRISING SUCH A REACTOR AND AN ELECTRIC STEAM GENERATOR, ASSOCIATED OPERATING METHOD

(30) Priorité: 19.09.2019 FR 1910310
(43) Date de publication de la demande: 24.03.2021
(73) Titulaire: Commissariat à l'Energie Atomique et aux Energies Alternatives, 75015 Paris (FR)
(72) Inventeur: BAURENS, Pierre, 38054 GRENOBLE (FR)
(74) Mandataire: Nony

(56) Documents cités:
- EP-A1- 0 913 357
- EP-A1- 3 574 991
- WO-A1-2004/091773
- WO-A1-2019/228796
- DE-A1- 10 040 539
- US-A1- 2012 025 140
- OGDEN JOAN ET AL: "Natural gas as a bridge to hydrogen transportation fuel: Insights from the literature", ENERGY POLICY, ELSEVIER, AMSTERDAM, NL, vol. 115, 28 janvier 2018 (2018-01-28), pages 317-329, XP085353176, ISSN: 0301-4215, DOI: 10.1016/J.ENPOL.2017.12.049

## Description

### Domaine technique

La présente invention concerne le domaine de la production d'hydrogène décentralisée pour le secteur de l'hydrogène marchand et l'approvisionnement des stations de distribution d'hydrogène.

Plus précisément, l'invention a trait en premier lieu au réacteur de production d'hydrogène par vaporeformage et l'unité décentralisée de production d'hydrogène marchand ou pour la mobilité qui le met en œuvre. On rappelle ici qu'on entend par « hydrogène marchand » l'hydrogène qui est produit, et conditionné par un acteur, dans des tubes sur une remorque de camion ou des bouteilles cylindriques puis transporté sur une distance significative et vendu à un consommateur différent du producteur, en général des petits consommateurs.

### Technique antérieure

La production de l'hydrogène nécessite de la matière contenant de l'hydrogène (eau, méthane, etc..) et de l'énergie (chaleur, électricité) pour extraire de la matière l'hydrogène. Pour produire de l'hydrogène localement, il faut que cette matière et cette énergie soient disponibles localement soit par l'intermédiaire d'un réseau de distribution présentant un maillage suffisamment fin, soit par des productions locales disponibles près du lieu de production et donc du besoin.

La production envisagée localement va de quelques kilogrammes à quelques centaines de kilogrammes par heure et l'unité de production doit être localisée proche du marché de consommation (petits consommateurs industriels ou de services, stations hydrogène pour la mobilité routière et fluviale).

L'intérêt majeur de ce marché au moins en Europe, outre le fait qu'il existe actuellement et représente une dizaine de % du marché de l'hydrogène déjà en France, est que les frais de conditionnement et de transport de l'hydrogène permettent potentiellement de dégager une marge pour une production locale de faible capacité par rapport à la production actuelle qui est massive, centralisée en deux ou trois endroits en Europe et de ce fait, éloignée des consommateurs.

Le marché des stations de distribution d'hydrogène pour la mobilité est quant à lui en devenir.

Les contraintes majeures pour une production délocalisée peuvent être résumées comme suit:
- une production faible, typiquement inférieure à une quantité journalière de l'ordre de 500 à 1000 kg ;
- une adaptation temporelle rapide au besoin, c'est-à-dire une dynamique de production élevée avec un faible temps de mise en production, pour éviter un stockage tampon d'hydrogène important et donc très coûteux,
- une empreinte au sol réduite et une grande compacité, c'est-à-dire que le volume de l'installation doit être faible,
- un coût d'investissement le plus réduit possible, sachant que pour de type d'installations, i.e. à faible production, il représente le facteur majoritaire du coût de production...

A ces contraintes s'ajoute en particulier pour les stations hydrogènes dédiées à la mobilité, la nécessité d'avoir une empreinte CO₂ la plus faible possible.

Du fait de l'existence des réseaux de transports et de distribution fortement maillé de la matière source d'hydrogène et de l'énergie nécessaire pour la production d'hydrogène, les deux technologies développées industriellement à ce jour en France et en Europe, qui sont susceptibles de réaliser une production délocalisée, sont l'électrolyse de l'eau et le reformage de gaz naturel.

En ce qui concerne l'électrolyse de l'eau, cette technologie présente un coût de production marginal de l'hydrogène trois à quatre fois supérieur à celui du gaz (selon le pays), un capex (acronyme de « capital expenditure » ou dépenses d'investissement) d'installation plus élevé que pour une unité de reformage, typiquement de 2 à 3 fois supérieur, si tant est que l'on puisse les comparer car les capacités d'unités existantes sont très différentes de celles de reformage actuelle, une consommation d'eau double, une efficacité énergétique moindre, typiquement de moins 5% à moins 20 %, y compris au niveau de l'unité et une émission de CO₂ qui est fonction de la nature du mix électrique du pays. Sur ce dernier point, au royaume uni, l'émission est de 400g CO₂/ kWh, ce qui est très élevé. En revanche, l'électrolyse de l'eau a pour avantages majeurs de bien être adaptée aux petites capacités de production, de nécessiter un espace occupé et de présenter une dynamique de variation de charge et de mise en route supérieure aux installations thermiques de type unité de vaporeformage comme décrit ci-après. Enfin, par la nature de l'énergie employée, elle offre l'opportunité de gains d'opportunité sur les services au réseau électrique (voie « power to gas »).

Comme déjà évoqué, l'existence d'un réseau de gaz naturel fortement maillé en France (maille inférieure à 30 kms), mais aussi en Europe, permet d'envisager la production délocalisée d'hydrogène par reformage de gaz naturel est envisageable.

La technologie de reformage du gaz naturel la plus adaptée à la production d'hydrogène est le reformage par la vapeur d'eau ou vaporeformage, qui est développée industriellement depuis plus de 50 ans.

Les réactions chimiques produisant l'hydrogène avec cette technologie sont les suivantes :
- la réaction de reformage du méthane à la vapeur d'eau, qui est fortement endothermique:

   [Chem 1] *CH*₄ + *H*₂*O* ↔ *CO* + 3*H*₂,

   avec ΔH= +247 kJ/mol ;
- la réaction de reformage du monoxyde de carbone à la vapeur d'eau, dite WGS (acronyme anglo-saxon pour « Water Gas Shift »), qui est exothermique :

   [Chem 2] *CO* + *H*₂*O* ↔ *CO*₂ + *H*_{2,}

   avec ΔH= -41.6 kJ/mol ;
   Chacune de ces réactions est faite dans un étage distinct de l'unité de production, respectivement usuellement appelés SMR (acronyme anglo-saxon de « Steam Methane Reformer ») et WGS (acronyme de « Water Gas Reaction »).

La réaction globale s'écrit :

[Chem 3] *CH*₄ + 2*H*₂*O* ↔ 4*H*₂ + *CO*₂

avec ΔH= +206 kJ/mol

Une unité de production d'hydrogène par vaporeformage telle qu'envisagée à partir des années 2010 est un système complexe à plusieurs postes ou étages fonctionnels, qui tend à la plus grande efficacité énergétique et au plus faible relâchement possible de CO₂ à la cheminée vers l'atmosphère.

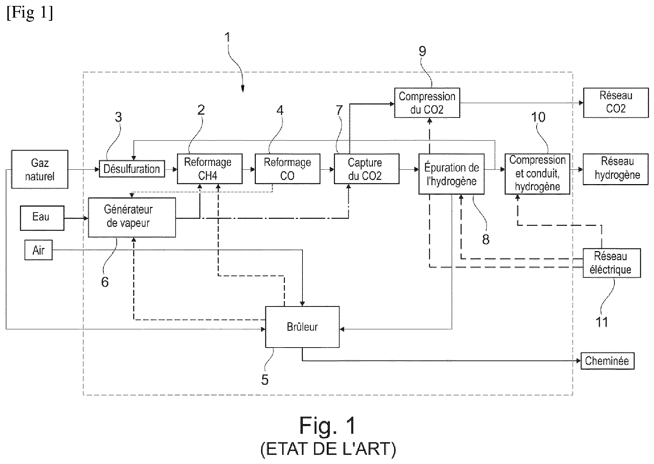

La figure 1 montre une représentation schématique d'une telle unité, globalement désignée par la référence 1, qui en outre met en œuvre une capture puis conditionnement du CO₂ produit.

Cette unité de vaporeformage 1 comprend principalement les postes ou étages suivants:
- au moins un étage de vaporeformage 2 du méthane en syngas (mélange des espèces: H2, CO, CO₂, CH₄).
- au moins un étage de désulfuration 3, en amont de l'étage de vaporeformage 2 ;
- au moins un étage de reformage 4 du CO à la vapeur, en aval de l'étage de vaporeformage 2 du méthane. La réaction de reformage à l'eau du CO est catalytique. Elle se déroule entre 400 et 300°C, et est exothermique, ce qui nécessite le refroidissement du ou des étages de reformage 4;
- au moins un brûleur 5 adapté pour produire la chaleur nécessaire à la réaction de reformage, mais aussi à la production de la vapeur d'eau. Chaque brûleur 5 réalise la combustion des gaz de purge des étages de séparation avals, notamment pour l'épuration d'hydrogène, avec en général un apport significatif, typiquement de 20 à 30%, de gaz naturel ;
- au moins un générateur de vapeur 6 qui est alimenté en chaleur par le(s) brûleur(s) 5 et par une récupération de chaleur dégagée par l'étage de reformage 4 du CO ;
- un poste de capture 7 du CO₂ produit, en général par adsorption sur amines, en aval de l'étage de reformage 4 du CO et qui est alimenté en vapeur d'eau par le générateur de vapeur 6;
- un étage d'épuration de l'hydrogène 8, en général par une adsorption par inversion de pression (PSA), en aval de l'étage de capture 7, les gaz de purge issus de cette épuration étant soit envoyés sur un brûleur 5, soit réinjectés en tête de vaporeformage, typiquement dans l'étage de désulfuration 3 comme montré en figure 1;
- des étages de compression 9, 10 pour les sorties de production respectivement de CO₂ et H₂;
- une alimentation électrique 11 pour le fonctionnement des différents composants électriques, notamment les compresseurs respectivement du CO₂ produit 9 et de l'hydrogène produit 10, ainsi que celui et les organes de régulation de l'unité. Comme montré en figure 1, l'alimentation électrique 9 est de préférence, prise sur le réseau électrique.

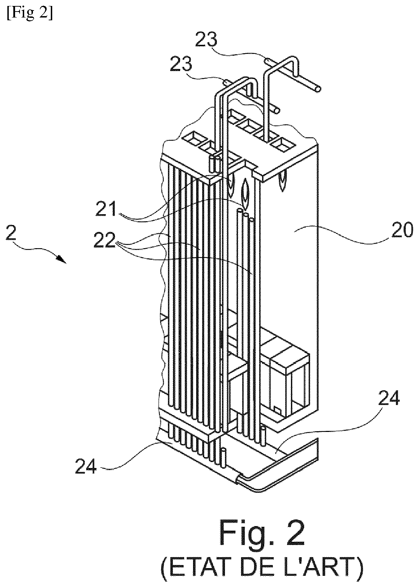

On a représenté en figure 2, un étage 2 de vaporeformage tel qu'il est constitué dans l'unité 1 montrée en figure 1.

L'étage 2 comprend un four dont l'enceinte 20 loge une pluralité de brûleurs à gaz 21 dans lequel sont suspendus des tubes formant chacun un réacteur de reformage 22, qui sont chauffés par convection des gaz de combustion et à l'intérieur desquels a lieu le reformage du méthane en syngas. Ces tubes 22 sont remplis de catalyseur et alimentés en tête depuis des collecteurs d'entrée 23 par un mélange de gaz naturel et de vapeur d'eau. Le syngas produit est extrait par des collecteurs de sortie 24.

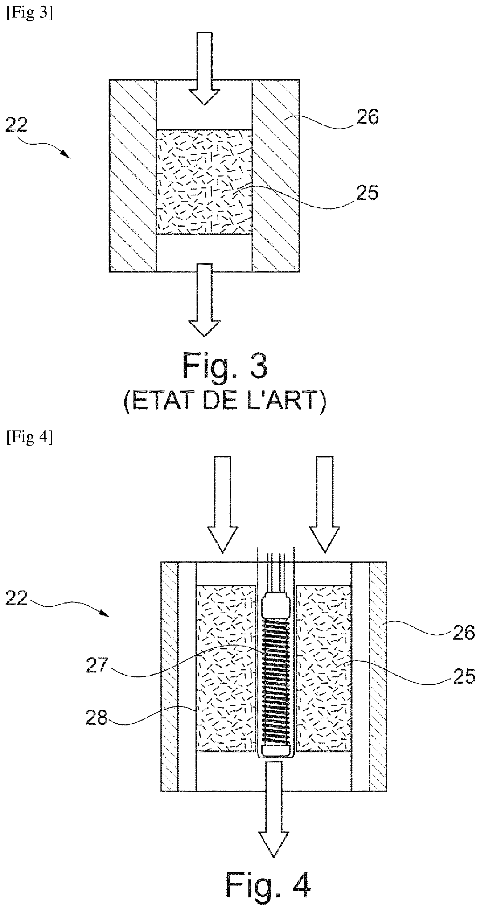

On a représenté schématiquement en figure 3, un tube de reformage 22 avec un catalyseur 25, les flèches symbolisant l'alimentation et la sortie des gaz. La température dans le catalyseur 25 doit être d'au moins 800°C, ce qui demande des températures dans l'enceinte 20 du four bien plus élevées et donc des températures externes à proximité des parois 26 de tubes de reformage en général de plus de 1000°C. Cela implique que la pression des gaz qui doit régner à l'intérieur d'un tube de reformage soit inférieure à environs 20 bars, afin de garantir la tenue mécanique du tube.

Les principaux avantages de cette unité de vaporeformage peuvent être résumés ainsi:
- un approvisionnement garanti par la disponibilité d'une mono source énergie -matière sur l'ensemble du territoire à moins de 30 kms, avec le réseau de transport de gaz naturel ;
- une technologie mature même si elle a été éprouvée à des échelles de production bien supérieure à celle de l'application envisagée, i.e. la production délocalisée d'hydrogène ;
- un coût de l'énergie et de la matière 3 à 4 fois moins élevé que pour les autres formes d'énergie en réseau ;
- un niveau élevé de la pression de la canalisation de gaz naturel qui est supérieur à 60 bars voire 80 bars dans une grande partie du réseau, ce qui a un impact bénéfique sur le dimensionnement de l'unité, sa consommation énergétique et son coût.

En revanche, elle présente encore des inconvénients majeurs comme suit :
- un coût très élevé des tubes de reformage 22 qui doivent réalisés en alliage haute température (T> 1100°C) pour pouvoir résister aux températures dans l'enceinte de four. Le coût du ou des alliages mis en œuvre peut être de l'ordre de 70 fois celui de l'acier ;
- une limitation de la pression interne à moins de 20 bars pour garantir la tenue mécanique aux températures dans l'enceinte de four et ce à un coût raisonnable, ce qui a des conséquences directes et fortes sur le dimensionnement, l'efficacité et le coût des étages en aval de l'étage de vaporeformage 2 (étage de reformage 4, étage 8 d'épuration de l'hydrogène par PSA et compresseurs avals 9, 10). Sur ce point, dans une unité 1, le coût d'un étage 8 mettant en œuvre une adsorption PSA est supérieur à celui de l'étage de vaporeformage 2 ;
- une intégration thermique compliquée pour garantir une efficacité énergétique correcte du four de l'étage de vaporeformage 2 qui n'évite malgré tout pas les pertes dans les fumées du four ;
- une faible dynamique possible de variations de la charge, du fait en partie des brûleurs au gaz naturel utilisés et de la forte inertie de l'ensemble du four et de l'étage de reformage 2 ;
- des temps de démarrage et d'arrêt qui, pour les raisons évoquées précédemment, sont importants et peuvent prendre typiquement plusieurs dizaines d'heures ;
- une très faible compacité, liée aux dimensions importantes de l'étage de vaporeformage 2 dont en partie celle de l'enceinte 20 du four, et à la difficulté de donner des géométries de tubes de reformage 22 autres que des géométries droites pour garantir les tenues en température et pression) et à celles des étages avals du fait de la limite en pression à 20 bars ;
- une consommation de gaz naturel, de l'ordre de 20 à 30 %, utilisée pour faire uniquement de la chaleur et qui d'une part, est génératrice d'une émission de NOx, et d'autre part amplifie l'émission locale de CO₂ due à la combustion de gaz dans le(s) brûleur(s). Ce CO₂ fortement dilué dans l'azote et la vapeur d'eau est par ailleurs difficilement captable, ce qui augmente encore le coût et la consommation d'énergie.

Enfin, il est à noter que l'utilisation d'un biogaz issu d'une méthanisation de déchets ou de biomasse en lieu et place du gaz naturel a été proposé récemment pour la production d'hydrogène.

Les inconvénients potentiels de cette ressource sont le prix du biogaz qui peut dépasser le prix nominal de l'électricité, le surcoût énergétique et financier dû à la mise en place du poste de capture du CO₂ en amont, et enfin la limitation éventuelle de la ressource énergétique locale.

Enfin, la demande de brevet DE10040539 décrit un réacteur à membrane pour la production d'hydrogène par reformage à la vapeur, à partir d'un courant d'hydrocarbures, ledit réacteur comprenant un chauffage électrique situé au centre du réacteur. La membrane est permsélective à l'hydrogène et le catalyseur de reformage est de préférence compris dans ou supporté par la membrane.

Il existe donc un besoin pour améliorer les solutions de production localisée d'hydrogène afin de remédier aux inconvénients précités, et en vue notamment d'améliorer le coût d'investissement et/ou de fonctionnement et le rendement.

Le but de l'invention est de répondre au moins en partie à ce besoin.

### Exposé de l'invention

Pour ce faire, l'invention concerne, sous l'un de ses aspects, un réacteur à lit fixe catalytique, comprenant :
- au moins une chambre de reformage, destinée à être alimentée en tête par un mélange de gaz naturel ou de biogaz et de vapeur d'eau et dans laquelle est logé un lit fixe catalytique de vaporeformage à la vapeur d'eau, la chambre de reformage étant délimitée par au moins une paroi ;
- au moins un élément chauffant électrique inséré dans le lit fixe catalytique pour chauffer ce dernier,
- au moins un élément d'isolation thermique agencé entre le lit fixe catalytique et la ou les parois de délimitation de la chambre de reformage.

De préférence, le réacteur à lit fixe catalytique est de forme générale tubulaire.

Avantageusement, l'élément chauffant électrique est un tube à base d'inconel ou une fibre en céramique ou un fil métallique chauffant moulé directement dans une céramique.

Avantageusement encore, l'élément d'isolation thermique est constitué par un textile constitué de nappes de fibres minérales ou de feutres de silice ou par un revêtement réfractaire inorganique.

Le réacteur comprend au moins une membrane permsélective à l'hydrogène, agencée dans la chambre de reformage, à la périphérie du et/ou insérée dans le lit fixe catalytique, en laissant un espace entre la membrane et la(les) paroi(s) de délimitation de la chambre ou l'élément d'isolation thermique, l'espace étant adapté pour la récupération de l'hydrogène produit par vaporeformage.

La membrane est avantageusement une membrane inorganique constituée de nickel ou de palladium déposé sur un support céramique poreux.

La membrane est de préférence coaxiale au lit fixe catalytique.

L'invention concerne également une unité de production d'hydrogène par vaporeformage, comprenant :
- au moins un étage de reformage du méthane à la vapeur d'eau comprenant au moins un réacteur à lit fixe catalytique comme décrit précédemment;
- au moins un générateur de vapeur électrique, relié fluidiquement en amont du réacteur, pour amener la vapeur d'eau à ce dernier.

Par « générateur de vapeur électrique », on entend ici et dans le cadre de l'invention, un générateur qui utilise comme source d'alimentation, l'électricité, pour produire de la chaleur qui génère la vapeur, au lieu de brûler du combustible.

Selon un mode de réalisation avantageux, la sortie du réacteur est reliée fluidiquement au réseau de distribution de gaz naturel.

Selon un autre mode de réalisation avantageux, l'unité comprend une ligne de retour reliée entre la sortie du réacteur et le réseau de gaz naturel, pour renvoyer dans ce dernier le gaz partiellement reformé dans le réacteur.

L'invention a enfin pour objet un procédé de fonctionnement d'une unité de production d'hydrogène par vaporeformage telle que décrite précédemment, selon lequel le mélange de gaz et de vapeur d'eau alimentant le réacteur à lit fixe catalytique est à une pression supérieure ou égale à 20 bars.

Dans ce procédé, le gaz est de préférence le gaz naturel du réseau de distribution dont la pression est celle d'alimentation du réacteur à lit fixe catalytique.

En analysant les inconvénients des unités de production d'hydrogène par vaporeformage existantes, telles qu'illustrées en figure 1, les inventeurs ont mis à jour que ceux majeurs provenaient de la conception même des étages de vaporeformage 2 mis en œuvre comme détaillé ci-dessus en référence à la figure 2.

Ils ont alors pensé de manière judicieuse à remplacer les brûleurs à gaz de l'étage de vaporeformage par un chauffage électrique directement intégré dans la zone catalytique d'un réacteur à lit fixe.

Cette intégration permet de travailler à haute pression, car la paroi de la chambre de reformage/confinement logeant le catalyseur n'a plus à assurer le passage de la chaleur depuis l'extérieur, nécessaire à la réaction.

La paroi de la chambre de reformage/confinement peut donc être froide, typiquement être à une température inférieure à 400°C, et être isolée thermiquement de la zone catalytique réactionnelle chaude soit par un isolant thermique rajouté soit par le lit de catalyseur lui-même, qui est peu conducteur de chaleur.

L'absence de nécessité d'avoir à conduire la chaleur depuis l'extérieur permet très avantageusement d'intégrer une membrane permsélective à l'intérieur de la chambre de reformage, en périphérie des zones chauffées du lit. L'implantation d'une telle membrane permet de prélever une partie de l'hydrogène produit dans le lit catalytique, avec pour effet bénéfique de contrebalancer l'effet négatif de la pression sur la conversion du méthane. Autrement dit, avec une membrane permsélective implantée comme évoqué, on augmente la surface membranaire et donc le taux de récupération de l'hydrogène produit.

Les avantages d'un réacteur de reformage avec intégration d'un élément de chauffage électrique selon l'invention au sein d'une unité de production d'hydrogène, en lieu et place des brûleurs à gaz des unités traditionnelles comme celles de la figure 1 sont nombreux et peuvent être résumés comme suit ;
- simplification de l'unité de production d'hydrogène par vaporeformage avec une amélioration des designs et de l'intégration éventuelle de fonctions dans les composants majeurs de l'unité; la simplification de l'unité au seul poste de reformage avec renvoi du gaz non reformé soit sur la canalisation de gaz naturel amont avec une faible dépense énergétique, soit sur une canalisation de gaz naturel aval (circuit de distribution P<40 bars
- amélioration de la compacité, du coût, de la dynamique de fonctionnement aussi bien de l'étage de reformage que de l'unité complète avec la possibilité très avantageuse de mettre en œuvre un générateur de vapeur à chauffage exclusivement électrique ;
- diminution de 20 à 30 % de la consommation de gaz naturel ;
- diminution des émissions de gaz à effet de serre et de polluants, notamment suppression de l'émission de NOx liée à la combustion de gaz naturel et diminution de l'émission de CO₂ correspondante à la diminution de la consommation de gaz naturel ;
- amélioration de l'efficacité énergétique de l'unité, que les inventeurs envisagent supérieure à 83% avec la mise en œuvre de l'invention,
- possibilité de monter la pression de fonctionnement à celle régnant dans la canalisation de transport/distribution de gaz naturel (circuit de distribution à pression inférieure à 40 bars), ce qui va se traduire par un gain d'efficacité sur le rendement d'extraction de l'hydrogène et par une diminution du volume et de coût des composants de l'unité (étages de reformage);
- possibilité d'augmenter la température effective du lit de catalyseur du fait de la localisation du chauffage électrique à l'intérieur du réacteur, avec comme corollaire la possibilité de remonter éventuellement le rendement de conversion affaibli par la montée en pression précédente,
- possibilité grâce à la membrane permsélective intégrée d'extraire une partie de l'hydrogène produit, de baisser la température à conversion donnée et de diminuer le flux vers le réacteur de WGS et d'augmenter la concentration en CO dans ce flux avec une répercussion forte sur la compacité et l'efficacité matière de l'étage WGS et la disparition probable d'au moins un étage WGS.
- possibilité du fait de la haute pression du lit catalytique de renvoyer sur la canalisation de gaz naturel si l'unité est placée sur un nœud de raccordement transport-distribution, le gaz partiellement reformé sortant du réacteur, ceci avec une perte énergétique de compression faible (perte de charge dans le lit), les étages avals pouvant n'être plus nécessaires ;
- possibilité d'extraire à une pression élevée, typiquement supérieure à 10 ou 20 bars selon la pression du réacteur de reformage de l'hydrogène de pureté élevée (fonction de la sélectivité de la membrane) ;
- amélioration de la dynamique de production, puisqu'un réacteur selon l'invention intégrant un élément chauffant électrique présente une inertie plus faible que les brûleurs à gaz selon l'état de l'art, avec une puissance de chauffe également plus facilement réglable ;
- possibilité de gain d'opportunité sur les services au réseau électrique (application « Power to gas »).

D'autres avantages et caractéristiques de l'invention ressortiront mieux à la lecture de la description détaillée d'exemples de mise en œuvre de l'invention faite à titre illustratif et non limitatif en référence aux figures suivantes.

### Brève description des dessins

[Fig 1] est une vue schématique d'une unité de production d'hydrogène par vaporeformage selon l'état de l'art.
[Fig 2] est une vue schématique en perspective d'un étage de vaporeformage selon l'état de l'art tel qu'il est mis en œuvre dans une unité selon la figure 1.
[Fig 3] est une vue schématique en coupe longitudinale d'un tube de reformage à lit fixe catalytique selon l'état de l'art tel qu'il est mis en œuvre dans un étage de reformage de la figure 2.
[Fig 4] est une vue schématique en coupe longitudinale d'un réacteur de reformage à lit fixe catalytique qui n'est pas selon l'invention.
[Fig 5] est une vue schématique en coupe longitudinale d'un réacteur de reformage à lit fixe catalytique selon un mode de réalisation avantageux de l'invention.
[Fig 6] illustre sous forme de courbes l'effet du prélèvement d'hydrogène sur le rendement de conversion.
[Fig 7] est une vue en vue schématique d'une unité de production d'hydrogène par vaporeformage qui n'est pas selon l'invention.

### Description détaillée

Les figures 1 à 3 sont relatives à un exemple d'étage de vaporeformage et d'unité de production d'hydrogène selon l'état de l'art. Ces figures 1 à 3 ont déjà été commentées en préambule et ne le sont donc pas plus ci-après.

Par souci de clarté, les mêmes références désignant les mêmes éléments selon l'état de l'art et selon l'invention sont utilisées pour toutes les figures 1 à 7.

Les flèches en pointillés sur les figures désignent les lignes électriques, tandis que celles en traits pleins désignent les lignes fluidiques.

On a représenté en figure 4, un réacteur 2 à lit fixe catalytique (hors invention).

Il comprend une chambre de reformage 22, de forme générale tubulaire, destinée à être alimentée en tête par un mélange de gaz naturel ou de biogaz et de vapeur d'eau et dans laquelle est logé un lit fixe catalytique 25 de vaporeformage à la vapeur d'eau.

Selon l'invention, un élément chauffant électrique 27 est inséré directement dans le lit fixe catalytique pour chauffer ce dernier. L'élément chauffant électrique 27 peut être un tube à base d'inconel ou une fibre en céramique ou un fil métallique chauffant moulé directement dans une céramique.

Un élément d'isolation thermique 28 est agencé entre le lit fixe catalytique 25 et la paroi 26 de délimitation de la chambre de reformage 22. Cet isolant thermique 28 permet de confiner la chaleur produite par le chauffage électrique à l'intérieur de la chambre de reformage 22 et donc d'avoir une paroi 26 relativement froide, typiquement à une température inférieure à 400°C lors de la réaction de vaporeformage. L'élément d'isolation thermique 28 peut être constitué par un textile constitué de nappes de fibres minérales ou de feutres de silice ou par un revêtement réfractaire inorganique.

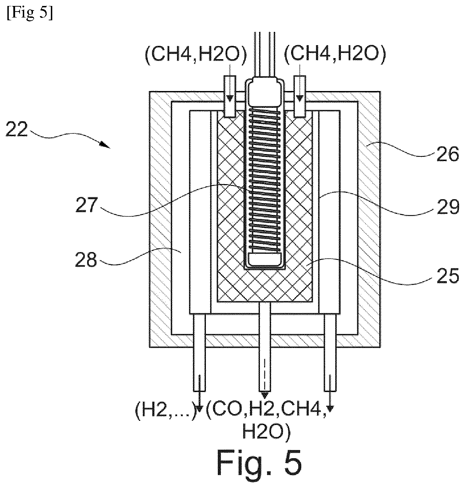

Un mode de réalisation avantageux du réacteur 2 à lit fixe catalytique selon l'invention est montré en figure 5.

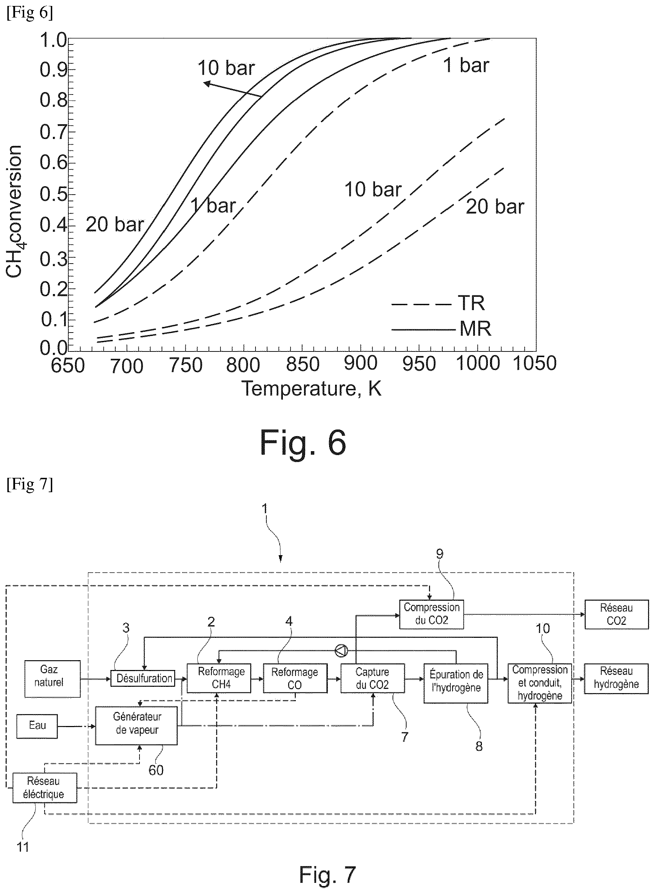

Selon ce mode, une membrane 29 permsélective à l'hydrogène, est agencée dans la chambre de reformage 22, coaxialement au lit fixe catalytique 25 en laissant dégagé un espace entre la membrane 29 et l'élément d'isolation thermique 28. Cet espace permet de prélever une partie de l'hydrogène produit par vaporeformage. dans le lit catalytique 25, avec pour avantage de contrebalancer l'effet négatif de la pression sur la conversion du méthane. Cet avantage est bien mis en exergue en figure 6, qui est extraite de la publication [1].

La membrane 29 peut être une membrane inorganique constituée de nickel ou de palladium déposé sur un support céramique poreux.

On a représenté en figure 7, une unité de production d'hydrogène 1 par vaporeformage qui intègre au moins un étage de reformage du méthane à la vapeur d'eau comprenant un réacteur 2 à lit fixe catalytique qui vient d'être décrit, ledit réacteur n'étant pas selon l'invention.

Comme visible sur cette figure 7, l'intégration d'un réacteur de vaporeformage 2 à chauffage interne électrique permet une amélioration de l'intégration éventuelle de fonctions dans les composants majeurs de l'unité.

Plus particulièrement, en lieu et place d'un générateur de vapeur 6 à chauffage par la chaleur de combustion d'un brûleur à gaz comme selon l'état de l'art (figure 1), l'unité 1 comprend un générateur de vapeur électrique 60, relié fluidiquement en amont du réacteur de vaporeformage, pour amener la vapeur d'eau à ce dernier.

On retrouve par ailleurs dans cette unité de vaporeformage 1 principalement les postes ou étages suivants:
- au moins un étage de désulfuration 3, en amont du réacteur de vaporeformage 2 selon l'invention;
- au moins un étage de reformage 4 du CO à la vapeur, en aval du réacteur de vaporeformage 2. Comme montré sur la figure 7, la chaleur qui se dégage de l'étage de reformage 4 peut alimenter également le générateur de vapeur électrique 60 ;
- un poste de capture 7 du CO₂ produit, par adsorption sur amines, en aval de l'étage de reformage 4 du CO et qui est alimenté en vapeur d'eau par le générateur de vapeur électrique 60;
- un étage d'épuration de l'hydrogène 8, par adsorption par inversion de pression (PSA), en aval de l'étage de capture 7, les gaz de purge issus de cette épuration étant réinjectés en tête de vaporeformage, typiquement dans l'étage de désulfuration 3 comme montré en figure 7;
- des étages de compression 9, 10 pour les sorties de production respectivement de CO2 et H2;
- une alimentation électrique 11 pour le fonctionnement des différents composants électriques, notamment les compresseurs respectivement du CO2 produit 9 et de l'hydrogène produit 10, ainsi que celui et les organes de régulation de l'unité. Comme montré en figure 7, l'alimentation électrique 9 est de préférence, prise sur le réseau électrique,

Le fonctionnement de l'unité de production d'hydrogène 1 est réalisé avantageusement en alimentant le réacteur à lit fixe catalytique 2 par un mélange de gaz naturel de distribution et de vapeur d'eau à une pression supérieure ou égale à 20 bars.

D'autres variantes et améliorations peuvent être envisagées sans pour autant sortir du cadre de l'invention tel que revendiquée ci-dessous.

### Liste des références citées :

[1] Gallucci 2011, « Modeling of Membrane reactors for hydrogen production and purification .royal Society of Chemistry 2011*. »*

## Revendications

1. Réacteur (2) à lit fixe catalytique, comprenant :
- au moins une chambre de reformage (22), destinée à être alimentée en tête par un mélange de gaz naturel ou de biogaz et de vapeur d'eau et dans laquelle est logé un lit fixe catalytique (25) de vaporeformage à la vapeur d'eau, la chambre de reformage étant délimitée par au moins une paroi (26) ;
- au moins un élément chauffant électrique (27) inséré dans le lit fixe catalytique pour chauffer ce dernier,
- au moins un élément d'isolation thermique (28) agencé entre le lit fixe catalytique et la ou les parois (26) de délimitation de la chambre de reformage,
- au moins une membrane (29) permsélective à l'hydrogène, agencée dans la chambre de reformage (22), à la périphérie du et/ou insérée dans le lit fixe catalytique, en laissant un espace entre la membrane et la(les) paroi(s) de délimitation de la chambre ou l'élément d'isolation thermique, l'espace étant adapté pour la récupération de l'hydrogène produit par vaporeformage.

2. Réacteur (2) à lit fixe catalytique selon la revendication 1, de forme générale tubulaire.

3. Réacteur (2) à lit fixe catalytique selon la revendication 2, la membrane étant coaxiale au lit fixe catalytique.

4. Réacteur (2) à lit fixe catalytique selon l'une des revendications précédentes, l'élément chauffant électrique (27) étant un tube à base de superalliages ou une fibre en céramique ou un fil métallique chauffant moulé directement dans une céramique.

5. Réacteur (2) à lit fixe catalytique selon l'une des revendications précédentes, l'élément d'isolation thermique étant constitué par un textile constitué de nappes de fibres minérales ou de feutres de silice ou par un revêtement réfractaire inorganique.

6. Réacteur à lit fixe catalytique selon l'une des revendications précédentes, la membrane étant une membrane inorganique constituée de nickel ou de palladium déposé sur un support céramique poreux.

7. Unité (1) de production d'hydrogène par vaporeformage, comprenant :
- au moins un étage de reformage du méthane à la vapeur d'eau comprenant au moins un réacteur à lit fixe catalytique (2) selon l'une des revendications précédentes ;
- au moins un générateur de vapeur électrique (60), relié fluidiquement en amont du réacteur, pour amener la vapeur d'eau à ce dernier.

8. Unité (1) selon la revendication 7, la sortie du réacteur étant configurée pour être reliée fluidiquement au réseau de distribution de gaz naturel.

9. Unité (1) selon la revendication 8, comprenant une ligne de retour configurée pour être reliée entre la sortie du réacteur et le réseau de gaz naturel, et pour renvoyer dans ce dernier le gaz partiellement reformé dans le réacteur.

10. Procédé de fonctionnement d'une unité de production d'hydrogène par vaporeformage selon l'une des revendications 7 à 9, selon lequel le mélange de gaz et de vapeur d'eau alimentant le réacteur à lit fixe catalytique est à une pression supérieure ou égale à 20 bars.

11. Procédé de fonctionnement selon la revendication 10, le gaz étant le gaz naturel du réseau de distribution dont la pression est celle d'alimentation du réacteur à lit fixe catalytique.

## Patentansprüche

1. Reaktor (2) mit katalytischem Festbett, umfassend:
- mindestens eine Reformierungskammer (22), welche dazu bestimmt ist, kopfseitig mit einer Mischung aus Erdgas oder Biogas und Wasserdampf gespeist zu werden, und in welcher sich ein katalytisches Festbett (25) zur Dampfreformierung mit Wasserdampf befindet, wobei die Reformierungskammer von mindestens einer Wand (26) begrenzt wird;
- mindestens ein elektrisches Heizelement (27), welches in das katalytische Festbett eingefügt ist, um letzteres zu erwärmen,
- mindestens ein Wärmeisolierungselement (28), das zwischen dem katalytischen Festbett und der oder den Begrenzungswänden (26) der Reformierungskammer angeordnet ist,
- mindestens eine selektiv für Wasserstoff durchlässige Membran (29), die in der Reformierungskammer (22) angeordnet ist, wobei sie in das katalytische Festbett eingefügt ist und/oder sich im Randbereich desselben befindet, wobei zwischen der Membran und der/den Kammerbegrenzungswand/-begrenzungswänden oder dem Wärmeisolierungselement ein Raum verbleibt, wobei der Raum dafür geeignet ist, den Wasserstoff aufzufangen, welcher mittels Dampfreformierung erzeugt wird.

2. Reaktor (2) mit katalytischem Festbett nach Anspruch 1, von allgemein röhrenförmiger Gestalt.

3. Reaktor (2) mit katalytischem Festbett nach Anspruch 2, wobei die Membran koaxial zum katalytischen Festbett ist.

4. Reaktor (2) mit katalytischem Festbett nach einem der vorhergehenden Ansprüche, wobei es sich bei dem elektrischen Heizelement (27) um eine Röhre auf Basis von Superlegierungen oder um eine Faser aus keramischen Stoffen oder um einen Metallheizdraht handelt, welcher unmittelbar vom einem keramischen Stoff umformt ist.

5. Reaktor (2) mit katalytischem Festbett nach einem der vorhergehenden Ansprüche, wobei das Wärmeisolierungselement in einem Textilstoff, welcher aus Lagen von mineralischen Fasern oder von Siliciumdioxidfilzen besteht, oder in einer anorganischen hitzebeständigen Beschichtung besteht.

6. Reaktor mit katalytischem Festbett nach einem der vorhergehenden Ansprüche, wobei es sich bei der Membran um eine anorganische Membran handelt, die aus Nickel oder Palladium besteht, welches auf einen porösen keramischen Träger aufgebracht ist.

7. Einheit (1) zur Erzeugung von Wasserstoff mittels Dampfreformierung, umfassend:
- mindestens eine Stufe zur Reformierung des Methans mit Wasserdampf, wobei sie mindestens einen Reaktor mit katalytischem Festbett (2) nach einem der vorhergehenden Ansprüche umfasst;
- mindestens einen elektrischen Dampferzeuger (60), welcher mit einer stromaufwärts des Reaktors gelegenen Stelle in Fluidverbindung steht, um diesem Wasserdampf zuzuführen.

8. Einheit (1) nach Anspruch 7, wobei die Austrittsöffnung des Reaktors derart ausgestaltet ist, dass sie mit dem Erdgasversorgungsnetz in Fluidverbindung steht.

9. Einheit (1) nach Anspruch 8, wobei sie eine Rückführungsleitung umfasst, die derart ausgestaltet ist, dass sie zwischen der Austrittsöffnung des Reaktors und dem Erdgasversorgungsnetz eine Verbindung herstellt und dass sie das Gas, welches in dem Reaktor teilweise reformiert wurde, in letzteres zurückleitet.

10. Verfahren zum Betrieb einer Einheit zur Erzeugung von Wasserstoff mittels Dampfreformierung gemäß einem der Ansprüche 7 bis 9, wobei gemäß demselben die Mischung aus Gas und Wasserdampf, welche in den Reaktor mit katalytischem Festbett eingespeist wird, unter einem Druck von mindestens 20 bar steht.

11. Verfahren zum Betrieb nach Anspruch 10, wobei es sich bei dem Gas um das Erdgas des Versorgungsnetzes handelt, wobei der Druck desselben dem Speisedruck des Reaktors mit katalytischem Festbett entspricht.

## Claims

1. Catalytic fixed bed reactor (2), comprising:
- at least one reforming chamber (22) which is to be fed at the top with a mixture of natural gas or biogas and steam and which accommodates a catalytic fixed bed (25) for steam reforming, the reforming chamber being delimited by at least one wall (26);
- at least one electric heating element (27) inserted into the catalytic fixed bed for heating thereof;
- at least one heat insulation element (28) disposed between the catalytic fixed bed and the wall or walls (26) delimiting the reforming chamber;
- at least one hydrogen-permselective membrane (29), disposed in the reforming chamber (22), on the periphery of and/or inserted into the catalytic fixed bed, with a space being left between the membrane and the wall(s) delimiting the chamber or the heat insulation element, the space being suitable for the recovery of the hydrogen produced by steam reforming.

2. Catalytic fixed bed reactor (2) according to Claim 1, having a tubular general shape.

3. Catalytic fixed bed reactor (2) according to Claim 2, the membrane being coaxial with the catalytic fixed bed.

4. Catalytic fixed bed reactor (2) according to any of the preceding claims, the electric heating element (27) being a tube based on superalloys or a ceramic fibre or a metal heating wire moulded directly into a ceramic.

5. Catalytic fixed bed reactor (2) according to any of the preceding claims, the heat insulation element being formed by a textile consisting of sheets of mineral fibres or of silica felts or by an inorganic refractory coating.

6. Catalytic fixed bed reactor according to any of the preceding claims, the membrane being an inorganic membrane consisting of nickel or of palladium deposited on a porous ceramic support.

7. Unit (1) for producing hydrogen by steam reforming, comprising:
- at least one steam methane reforming stage comprising at least one catalytic fixed bed reactor (2) according to any of the preceding claims;
- at least one electric steam generator (60) connected fluidically upstream of the reactor, for supplying steam to said reactor.

8. Unit (1) according to Claim 7, the outlet of the reactor being configured for fluidic connection to the natural gas distribution network.

9. Unit (1) according to Claim 8, comprising a return line configured for connection between the outlet of the reactor and the natural gas network, and for returning the gas partially reformed in the reactor to said network.

10. Method for operating a unit for producing hydrogen by steam reforming according to any of Claims 7 to 9, wherein the mixture of gas and steam fed to the catalytic fixed bed reactor is at a pressure of greater than or equal to 20 bar.

11. Operating method according to Claim 10, the gas being the natural gas of the distribution network with the pressure at which the catalytic fixed bed reactor is fed.
